# EUROPÄISCHE PATENTSCHRIFT

(11) **EP 2 872 596 B1**
(45) Veröffentlichungstag und Bekanntmachung des Hinweises auf die Patenterteilung: **21.11.2018**
(21) Anmeldenummer: 13736898.1
(22) Anmeldetag: 11.07.2013
(51) Int. Cl.: C10B 49/04, C04B 7/44, C10B 53/02

(54) **VERFAHREN ZUR BEHANDLUNG VON BIOMASSE IN EINER ANLAGE ZUR HERSTELLUNG VON ZEMENT UND DAZU KORRESPONDIERENDE ANLAGE**
CEMENT PRODUCTION PLANT AND METHOD FOR TREATING BIOMASS IN SUCH A PLANT
PROCÉDÉ DE TRAITEMENT DE BIOMASSE DANS UNE INSTALLATION DE FABRICATION DE CIMENT ET INSTALLATION CORRESPONDANTE

(30) Priorität: 12.07.2012 DE 102012013877
(43) Veröffentlichungstag der Anmeldung: 20.05.2015
(73) Patentinhaber: KHD Humboldt Wedag GmbH, 51067 Köln (DE)
(72) Erfinder: SCHÜRMANN, Heiko, 51373 Leverkusen (DE)
(86) Internationale Anmeldenummer: PCT/EP2013/064713
(87) Internationale Veröffentlichungsnummer: WO 2014/009487

(56) Entgegenhaltungen:
- DE-A1- 3 218 232
- DE-A1- 3 542 004
- JP-A- 2002 143 829
- JP-A- 2005 097 063
- JP-A- 2005 239 907

## Beschreibung

Die Erfindung betrifft ein Verfahren zur Behandlung von Biomasse als Brennstoff in einer Anlage zur Herstellung von Zementklinker aus Rohmehl, aufweisend in Materialstromrichtung des Rohmehls einen ersten Wärmetauscher, einen Calcinator und einen Drehrohrofen, und eine dazu korrespondierende Anlage zur Herstellung von Zement, welche eine Vorrichtung zur Behandlung von Biomasse aufweist.

Zur Herstellung von Zementklinker wird in den am meisten durchgeführten Verfahren Rohmehl zunächst in einer ersten Stufe durch Wärmebehandlung vorcalciniert und in einem zweiten Schritt zu Klinkerphasen gesintert. Beide Verfahrensschritte sind hochgradig energiezehrend, da sowohl das formelle Austreiben von CO₂ aus dem Kalk wie auch das Sintern zu Calciumsilikat mit Energieaufnahme verbunden sind.

Die zur Herstellung von Zementklinker notwendige Wärmeenergie wird dem Prozess durch Verbrennung verschiedener Brennstoffe zugeführt. Hochwertige und damit auch hochkalorische Brennstoffe werden dem Verfahren an wichtigen Stellen zur Erzeugung hoher Temperatur zugeführt, wie beispielsweise dem Brenner im Drehrohrofen zur Erzeugung der dort notwendigen hohen Temperaturen. An anderen Stellen, bei denen die Erzeugung hoher Temperaturen weniger wichtig ist, als die Erzeugung von reduktiven Bedingungen, kann auch auf weniger kalorische oder weniger hochwertige Brennstoffe zurück gegriffen werden, wie beispielsweise die Verbrennung von getrocknetem Hausmüll, Tierkadaver, geschredderte Autoreifen, Verbrennung von Lösemittelabfällen oder Altpapier. Ein wesentlicher Kostentreiber der variablen Kosten bei der Herstellung von Zement ist der Preis für Brennstoffe. Ein feuchter Brennstoff ist dabei günstiger einzukaufen als beispielsweise ein vorgetrockneter Brennstoff. Die zur Verfügung stehenden Brennstoffe weisen dabei unterschiedliche Qualitäten in Bezug auf Brennbarkeit, Brennwert, Feuchtigkeit, Flammpunkt und Gehalt an Metallen und anderen Schadstoffen auf, die durch Verbrennung nicht zerstört werden können.

Um den stetigen Bedarf an Brennstoffen zu stillen, ist man bereits dazu übergegangen, feuchte Biomasse, die beispielsweise aus der Landwirtschaft stammt, in Anlagen zur Herstellung von Zement als Brennstoff einzusetzen. Die Verwendung von Biomasse als Brennstoff ist aber nicht unproblematisch. Zunächst ist die Biomasse feucht, in der Regel nur schwer zu fördern, weil sie unbeständige Eigenschaften von leicht und trocken bis hin zu faserig, schwer und feucht aufweist. Man ist daher dazu übergegangen, die in Anlagen zur Herstellung von Zementklinker als Brennstoff verwendete Biomasse vorzutrocknen.

Nach der Lehre der DE 10 2007 015 089 A1 wird vorgeschlagen, die Restwärme der Zementklinkerproduktion, die am Ende des Produktionsprozesses gewonnen wird, zur Trocknung von Biomasse einzusetzen, damit diese als Brennstoff in der Anlage zur Herstellung von Zement verwendet werden kann. Als Besonderheit wird in dieser Druckschrift gelehrt, die Biomasse mit den fertig gebrannten Klinkergranalien zu vermengen und anschließend das Gemisch aus getrockneter Biomasse und Zementklinker durch einen Sichter voneinander zu trennen. Durch die Vermengung mit den stark abrasiven Zementklinkergranalien wird die Biomasse noch während des Trocknens vorzerkleinert.

Der so hergestellte Brennstoff ist aber nicht hochkalorisch, weil die Biomasse zum großen Teil aus Kohlehydraten besteht. Das bedeutet, dass formell Wasser in der organischen Masse chemisch gebunden ist, die beim Verbrennen einen großen Teil der Verbrennungsenthalpie aufnimmt. Hohe Temperaturen lassen sich somit durch Verbrennung der Biomasse nicht erreichen. Des Weiteren ist die vorgetrocknete Biomasse in der Regel faserig und daher in Brennern schwer handhabbar.
In der DE 10 2009 052 902 A1 wird die Niedertemperaturpyrolyse von Biomasse in einer Wirbelschicht beschrieben. Nach der dort beschriebenen Lehre ist die Pyrolyse in einem sauerstofffreien Gas durchzuführen und das Pyrolysegas ist gegebenenfalls mit Hilfe eines Stützbrennstoffes zu verbrennen. Als Pyrolysegas kommen Prozessgase in Betracht. In einem Zementwerk sind die verfügbaren Prozessgase entweder sauerstoffhaltig oder sie weisen eine hohe Kohlendioxid-Konzentration auf, wobei das Kohlendioxid beim Einsatz zur Pyrolyse unter Bildung von Kohlenmonoxid oxidativ wirkt.
Aus den Druckschriften JP 2005 097063 A und JP 2005 239907 A sind Verfahren und Anlagen bekannt, bei denen Biomasse in Anlagen zur Herstellung von Zement durch Verkohlung zu Brennstoff aufbereitet wird. Zur Verkohlung (einschließlich Trocknung) werden heiße Abgase aus in Wärmetauschern der Anlage gegebenen Hochtemperaturbereichen, des Näheren aus dem Drehrohrofen, abgezweigt und einem entsprechenden Reaktor zugeführt. Um geeignete Bedingungen (insb. hinsichtlich Temperatur und Sauerstoffgehalt) im Reaktor zur Aufbereitung der Biomasse herzustellen, wird in Ausführungsformen eine einstellbare Mischung in diesem Reaktor mit weiteren Abgasen gelehrt, die dem gattungsgemäßen Zyklonwärmetauscher der Zementherstellungsanlage entnommen werden.

Aufgabe der Erfindung ist es daher, das Verfahren zur Behandlung von Biomasse in einer Anlage zur Herstellung von Zement so fortzubilden, dass die Nachteile aus dem Stand der Technik nicht auftauchen.

Die der Erfindung zugrunde liegende Aufgabe wird gelöst durch das Verfahren nach Anspruch 1 bis 7. Eine dazu korrespondierende Anlage zur Herstellung von Zement ist in den Ansprüchen 8 und 9 angegeben.

Nach der Erfindung ist vorgesehen, dass die Biomasse unter Verwendung von Abgasen eines in der Anlage vorhandenen zweiten Wärmetauschers zunächst vorgetrocknet und anschließend in einem Verkohlungsreaktor verkohlt wird, wobei zum Verkohlen im Kreislauf geführte, aus dem Drehrohrofen in den Calcinator und dann in den ersten Wärmetauscher strömende Abgase verwendet werden, wobei in den Abgasen des ersten Wärmetauschers zunächst eine Nachverbrennung zur Reduktion des Sauerstoffgehalts durchgeführt wird. Die so gewonnenen kohleartigen Biomassebestandteile können sodann durch ihre Konsistenz leicht vermahlen und in einem Kohlestaubbrenner der Anlage zur Herstellung von Zement als Brennstoff zugeführt werden. Dadurch ergibt sich der Vorteil, dass der spezifische Brennwert der Biomasse bezogen auf das Gewicht der verkohlten Biomasse im Vergleich zur unbehandelten Biomasse erhöht wird. Freilich ist die Erhöhung des Brennwertes auf das formelle Austreiben von Wasser aus den Kohlehydraten zurückzuführen. Die Energie zur Verkohlung der Biomasse, die in die Biomasse eingegangen ist, stammt aus der ansonsten ungenutzten niederkalorischen Abwärme der Anlage, die aus einem Wärmetauscher stammt. Erfindungsgemäß wird also eine niederkalorische, am Ausgang des ersten Wärmetauschers vorhandene Wärme in den Brennstoff eingebracht, der erst dadurch in der Lage ist, hochkalorische Wärme, also Wärme mit hoher Temperatur zu erzeugen.

Zur Verkohlung von Biomasse ist es notwendig, dass die Umgebung sauerstoffarm ist, um ein Verbrennen der Biomasse während des Verkohlungsprozesses zu verhindern. Des Weiteren muss die Umgebungstemperatur in einem vorbestimmten Temperaturintervall liegen, da ansonsten die Biomasse pyrolysiert statt verkohlt wird, wobei brennbare Gase als Produkt der Wärmebehandlung entstehen.

Daher ist erfindungsgemäß vorgesehen, dass die Abgase aus dem ersten in der Anlage zur Herstellung von Zement befindlichen Wärmetauscher durch Verbrennung von Restsauerstoff befreit werden, zumindest aber sollte der Sauerstoffgehalt reduziert werden. Die Reduzierung des Sauerstoffgehaltes kann durch einen Brenner erreicht werden, der überstöchiometrisch mit Brennstoff versorgt wird, so dass vorhandener Sauerstoff mit einem Überschuss an Brennstoff reduziert wird. Die so erhaltene reduktive und sauerstoffarme Abluft des Wärmetauschers kann sodann zur Verkohlung genutzt werden. Sofern die Temperatur der so hergestellten Abluft zur Verkohlung zu hoch ist, dass mit einer Pyrolyse statt mit einer Verkohlung zu rechnen ist, kann in Ausgestaltung der Erfindung der Abluft zur Kühlung Wasser zugefügt werden. Das Wasser stört beim Verkohlungsprozess nicht, vorausgesetzt, die Verkohlungsumgebung enthält nicht so viel Wasser, dass die Verkohlung zu einer Hydratisierung oder zu einer partiellen Oxidation der hergestellten Kohle führt.

Die Biomasse kann durch Abluft verschiedener, in der Anlage zur Herstellung von Zement befindlicher Wärmetauscher vorgetrocknet und verkohlt werden. Es hat sich als vorteilhaft erwiesen, wenn die Abluft des Wärmetauschers, der in Gasströmungsrichtung am Ende der Anlage zur Herstellung von Zementklinker vorhanden ist, erfindungsgemäß zur Verkohlung der Biomasse genutzt wird. Hierzu wird die Abluft der in typischen Anlagen zur Herstellung von Zement befindlichen Zyklonwärmetauschern zur Vorwärmung des Rohmehls in einen Reaktor geleitet, wobei diese Abluft durch Brenner und Beimischung von Wasser auf die richtigen Verkohlungsparameter eingestellt wird. Die Abluft des Verkohlungsreaktors wird sodann in einen in Gasströmungsrichtung am Anfang der Anlage vorhandenen Klinkerkühler geleitet, wobei diese Kühlluft nach Kühlung des aus der Anlage fallenden Zementklinkers in die Anlage geleitet wird, wo gegebenenfalls in der Abluft des Verkohlungsreaktors befindliche Pyrolysegase und Biomassepartikel verbrannt werden.

Der Reaktor zur Verkohlung ist in bevorzugter Weise ein Gegenstromreaktor. Dabei wird erfindungsgemäß vorgetrocknete Biomasse in zerkleinerter Form der heißen und auf Verkohlungsparameter eingestellten Abluft entgegengeströmt.

In einer bevorzugten Ausführung der Erfindung wird verfahrensgemäß die Biomasse zunächst in einem Drehrohrtrockner getrocknet. Zur Trocknung der Biomasse wird ein Gaskreislauf ausgebildet, der die Klinkerkühlerabluft aus dem hinteren Teil des Klinkerkühlers nutzt, wo der Klinker bereits weitgehend abgekühlt ist und wo die Klinkerkühlerabluft als Restwärme nur noch wenige hundert Grad Celsius als für das Herstellungsverfahren von Zementklinker übliche Temperatur aufweist und daher zur Rekuperation nicht mehr geeignet ist. Die dort entstehende Klinkerkühlerabluft wird in den Drehrohrofentrockner geleitet und die beim Trocknen der Biomasse anfallenden Brüden werden nach Verlassen des Drehrohrtrockners in einem Kondensator aus der umlaufenden Kühlerabluft auskondensiert. Nachdem die von den Brüden befreite Abluft des Drehrohrtrockners von den Brüden befreit ist, wird diese im Umlauf befindliche Luft wieder dem Klinkerkühler zugeführt. Die den Drehrohrtrockner verlassende Biomasse wird hingegen in einen Gegenstromreaktor geleitet, wo die Biomasse im Gegenstrom verkohlt wird. Auch beim Verkohlen bilden sich Brüden durch die formelle Austreibung von Wasser aus der im Wesentlichen aus Kohlenhydraten bestehenden Biomasse. Diese Brüden werden nach Austritt aus dem Reaktor zum Verkohlen in den vorderen Teil des Klinkerkühlers geleitet, wo diese Gase den noch heißen Kühler abkühlen und dabei in den Drehrohrofen als Sekundärluft gelangen. Dort werden die Abgase der Verkohlung verbrannt.

Nach Verkohlung wird die Biomasse vermahlen und den in der Anlage vorhandenen Kohlestaubbrennern zugeführt. Dabei ist als bevorzugter Ort der Verbrennung der Biomasse der Brenner in dem Drehrohrofen oder der Brenner im Calcinator vorgesehen.

Der Gegenstromreaktor zur Verkohlung der Biomasse wird von Abgasen des in der Anlage zur Herstellung von Zement vorhandenen ersten Wärmetauschers durchströmt.

Die Erfindung wird anhand der folgenden Figuren näher erläutert.

Es zeigt:
- Figur 1: einen Teil einer Anlage zur Durchführung des erfindungsgemäßen Verfahrens,
- Figur 2: eine Anlage zur Durchführung des erfindungsgemäßen Verfahrens in einer Ausgestaltung der Erfindung.

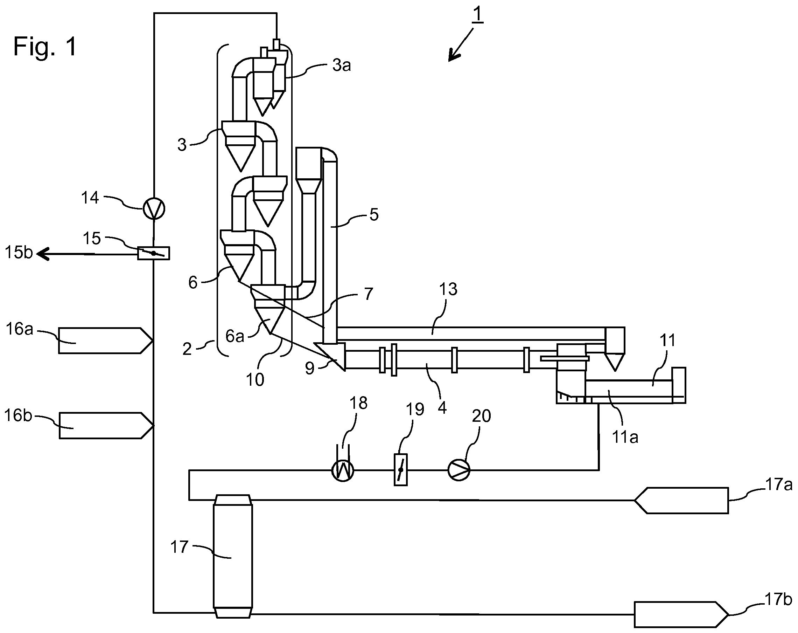

In Figur 1 ist eine Anlage 1 zur Herstellung von Zement skizziert, die zur Durchführung des Verfahrens, unter Verkohlung von Biomasse Zement herzustellen, geeignet ist. Die Anlage 1 zur Herstellung von Zement beginnt in Materialstromrichtung gesehen beim Wärmetauscher 2 in den von oben Rohmehl über entsprechende Entstaubungsvorrichtungen 3a in den obersten Zyklonwärmetauscher 3 eingeführt wird. Im Gegenstrom der entgegenströmenden Abluft eines in Materialstromrichtung später folgenden Drehrohrofens 4 wird das eingeführte Rohmehl vorgewärmt und in einem dem Wärmetauscher 2 folgenden Calcinator 5 wird das Rohmehl calciniert, also formell von CO₂ befreit. Dabei fließt das Rohmehl bis in den zweituntersten Zyklonwärmetauscher 6, fällt dort über eine Fallleitung 7 in den Anfang des Calcinators 5 und das Rohmehl wird dort von der aufsteigenden Abluft des dem Calcinator 5 folgenden Drehrohrofens 4 mitgerissen; dabei ist der Calcinator 5 mit dem Drehrohrofen 4 über eine Drehrohrofeneinlaufkammer 9 verbunden. Nach dem das Rohmehl im Calcinator 5 in der aufsteigenden Abluft des Drehrohrofens 4 calciniert worden ist, wird das calcinierte Rohmehl im untersten Zyklonwärmetauscher 6a des Wärmetauschers 2 von der Abluft getrennt und über eine weitere Fallleitung 10 der Drehrohrofeneinlaufkammer 9 zugeführt, wo das Rohmehl unterhalb der aufströmenden Abluft des Drehrohrofens 4 in den Drehrohrofen 4 selbst gelangt. Am Ende des Drehrohrofens 4 ist ein Klinkerkühler 11 angeordnet, in dem der frisch gesinterte Klinker rasch abgekühlt wird, um die beim Sintern entstehenden Klinkerphasen durch Abschrecken in der Kühlluft zu stabilisieren. Im Klinkerkühler 11 existieren zwei Zonen, davon ist Eine die erste Zone 11a, die von Kühlluft durchströmt wird und eine größere Menge Wärme mit hoher Temperatur aufnimmt. Diese Kühlluft aus Zone 11a, wird in den Drehrohrofen 4 als Sekundärluft wieder zugeführt, wodurch die hohe Abwärme des Klinkers in den Prozess zur Herstellung von Zement rekuperiert wird. Ein Teil der erwärmten Kühlluft aus Zone 11a wird über eine Tertiärluftleitung 13 in den Calcinator 5 geführt, wodurch eine gestufte Verbrennung erreicht wird, die zu einer emissionsarmen Verbrennung führt. Die aus dem Drehrohrofen 4 in den Calcinator 5 und sodann in den Wärmetauscher 2 strömende Abluft wird gemäß der Erfindung über einen Verdichter 14 und einem Regelorgan 15, das einen Teil der Abluft ins Freie abführt, in eine Leitung geleitet, wo die Abluft zunächst durch einen Brenner 16a von noch vorhandenem Restsauerstoff befreit wird. Nach Passage des Brenners 16a wird die im Kreislauf geführte Abluft des Wärmetauschers 2 durch Eindüsen von Wasser an Stelle 16b auf eine Temperatur abgekühlt, die zur Verkohlung geeignet ist und bei der keine Pyrolyse des Brennstoffes stattfindet. Diese so erhaltene heiße Abluft wird sodann in einen Reaktor 17 geführt, wo im Gegenstrom Biomaterial von Stelle 17a eingeführt wird, das im Gegenstrom verkohlt. Die am unteren Ende des Reaktors 17 austretende Biokohle wird so dann über eine Leitung 17b einer Mühle zugeführt und nach Mahlung gelagert oder direkt einem Brenner in der Anlage 1 zur Herstellung von Zement zugeführt. Beim Verkohlen entstehen Brüden, die nach Austritt aus dem Reaktor 17 in einem Kondensator 18 auskondensiert werden. Die von den Brüden befreite Abluft des Reaktors 17 wird über ein Regelorgan 19 und einen Verdichter 20 der vorderen Zone 11a des Klinkerkühlers 11 zugeführt, wo gegebenenfalls im Reaktor 17 entstandene Pyrolysegase über die Klinkerkühlung dem Drehrohrofen 4 wieder zugeführt werden.

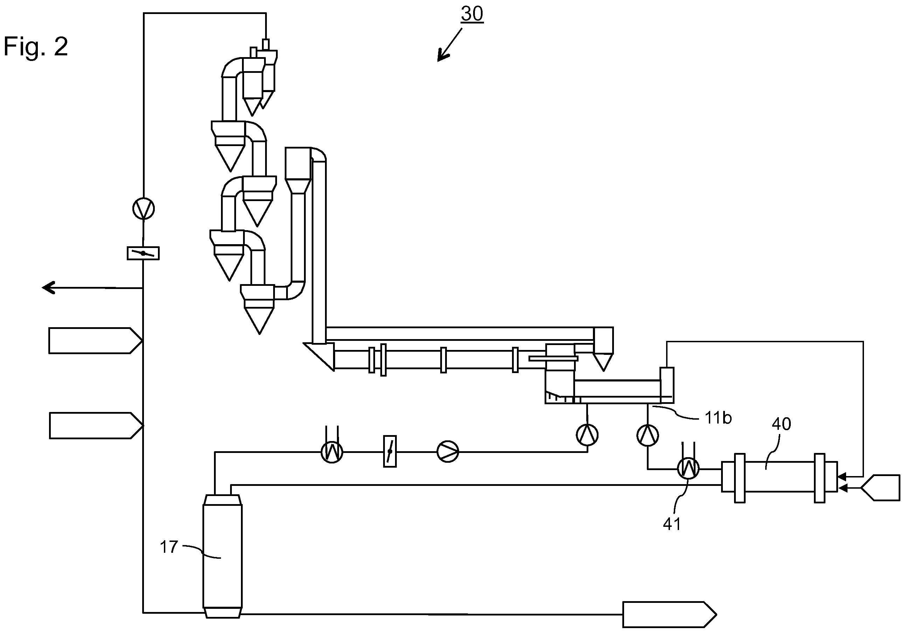

In Figur 2 ist eine Anlage 30 skizziert, die ein Verfahren nach Ausgestaltung der Erfindung durchführen kann. Diese Anlage weist im Unterschied zur Anlage 1 in Figur 1 erfindungsgemäß noch einen Trocknungsreaktor, ausgeführt als Drehrohrtrockner 40, auf. Statt Biomaterial dem Reaktor 17 direkt aufzugeben, wird in dem Drehrohrtrocker 40 das Biomaterial erfindungsgemäß zunächst vorgetrocknet, wobei Klinkerkühlerabluft aus einem zweiten Teil 11b des Klinkerkühlers im Umlauf gehalten wird. Die beim Trocknen entstehenden Brüden werden in diesem Kondensator 41 auskondensiert und die von den Brüden befreite Trocknungsluft wird dem hinteren Teil 11b des Klinkerkühler 11 zugeführt, wo die Temperatur des Klinkers die übliche Temperatur von Klinker in einer derartigen Anlage aufweist. Die wenige hundert Grad warme Klinkerkühlerabluft wird nach Kühlung des im hinteren Teil des Klinkerkühlers befindlichen Klinkers wieder in den Drehrohrtrockner zur Trocknung weiteren Biomaterials zurückgeführt.

**BEZUGSZEICHENLISTE**

| | | | |
|---|---|---|---|
| 1 | Anlage | 14 | Verdichter |
| 2 | Wärmetauscher | 15 | Regelorgan |
| 3a | Entstaubungsvorrichtung | 16a | Brenner |
| 3 | Zyklonwärmetauscher | 16b | Stelle, Eindüsung Wasser |
| 4 | Drehrohrofen | 17a | Stelle, Einführung Biomaterial |
| 5 | Calcinator | 17b | Leitung für Biokohle |
| 6 | Zyklonwärmetauscher | 17 | Reaktor |
| 7 | Fallleitung | 18 | Kondensator |
| | | 19 | Regelorgan |
| 9 | Drehrohrofeneinlaufkammer | 20 | Verdichter |
| 10 | Fallleitung | | |
| 11 | Klinkerkühler | 30 | Anlage |
| 11a | Zone | 40 | Drehrohrtrockner |
| 11b | Zone | 41 | Kondensator |
| | | | |
| 13 | Tertiärluftleitung | | |

## Patentansprüche

1. Verfahren zur Behandlung von Biomasse als Brennstoff in einer Anlage (1) zur Herstellung von Zementklinker aus Rohmehl, aufweisend in Materialstromrichtung des Rohmehls einen ersten Wärmetauscher (2), einen Calcinator (5) und einen Drehrohrofen (4),
**gekennzeichnet durch**
Vortrocknen der Biomasse in einem Trocknungsreaktor (40), wobei die Biomasse durch die Abgase eines zweiten Wärmetauschers (11) der Anlage (1) vorgetrocknet wird, und durch
anschließendes Verkohlen der Biomasse in einem Verkohlungsreaktor (17), wobei zum Verkohlen im Kreislauf geführte, aus dem Drehrohrofen (4) in den Calcinator (5) und dann in den ersten Wärmetauscher (2) strömende Abgase verwendet werden, wobei in den Abgasen des ersten Wärmetauschers (2) zunächst eine Nachverbrennung (16a) zur Reduktion des Sauerstoffgehalts durchgeführt wird.

2. Verfahren nach Anspruch 1,
**dadurch gekennzeichnet, dass**
dem Abgas des ersten Wärmetauschers (2) Wasser zur Abkühlung auf die notwendige Verkohlungstemperatur beigemischt wird.

3. Verfahren nach einem der Ansprüche 1 oder 2,
**gekennzeichnet durch**
das Einleiten der Abluft des Verkohlungsreaktors (17) in einen in der Anlage befindlichen Klinkerkühler (11).

4. Verfahren nach einem der Ansprüche 1 bis 3,
**dadurch gekennzeichnet, dass**
die Verkohlung im Verkohlungsreaktor (17) im Gegenstromverfahren geschieht.

5. Verfahren nach einem der Ansprüche 1 bis 4,
wobei als Trocknungsreaktor ein Drehrohrtrockner (40) eingesetzt wird und wobei zur Trocknung Klinkerkühlerabluft aus dem hinteren Teil (11b) eines in der Anlage (1) befindlichen Klinkerkühlers (11) entnommen wird, in dem der Klinker bereits weitgehend abgekühlt ist und nur noch Restwärme mit für das Herstellungsverfahren von Zementklinker üblicher Temperatur aufweist.

6. Verfahren nach einem der Ansprüche 1 bis 5,
**dadurch gekennzeichnet, dass**
die Biomasse nach Verkohlung vermahlen wird.

7. Verfahren nach Anspruch 6,
**dadurch gekennzeichnet, dass**
die verkohlte Biomasse einem Brenner in dem Drehrohrofen (4) und/oder einem Brenner in dem Calcinator (5) zugeführt wird.

8. Anlage (1) zur Herstellung von Zement aus Rohmehl gemäß Anspruch 1, welche eine Vorrichtung zur Behandlung von Biomasse aufweist,
**dadurch gekennzeichnet, dass**
ein Trocknungsreaktor (40) zum Vortrocknen der Biomasse vorhanden ist, wobei die Biomasse durch die Abgase eines zweiten Wärmetauschers (11) der Anlage (1) vorgetrocknet wird, und dass
ein Verkohlungsreaktor (17) vorhanden ist, der von im Kreislauf geführten Abgasen des in der Anlage (1) zur Herstellung von Zement vorhandenen ersten Wärmetauschers (2), die aus dem Drehrohrofen (4) und dem Calcinator (5) stammen, durchströmt wird, in welchem die vorgetrocknete Biomasse verkohlt wird, wobei ein Brenner (16a) zur Reduktion des Sauerstoffgehalts in den Abgasen des ersten Wärmetauschers (2) vorgesehen ist.

9. Anlage nach Anspruch 8,
**dadurch gekennzeichnet, dass**
der Trocknungsreaktor ein Drehrohrtrockner (40) zum Vortrocknen der Biomasse in der Anlage (1) ist.

## Claims

1. Process for the treatment of biomass as fuel in a plant (1) for producing cement clinker from raw meal, which comprises, in the flow direction of the raw meal, a first heat exchanger (2), a calciner (5) and a rotary tube furnace (4), **characterized by** predrying of the biomass in a drying reactor (40), where the biomass is predried by means of the exhaust gases from a second heat exchanger (11) of the plant (1), and by subsequent carbonization of the biomass in a carbonization reactor (17), where circulated exhaust gases flowing from the rotary tube furnace (4) into the calciner (5) and then into the first heat exchanger (2) are used for carbonization, where firstly an after-combustion (16a) for reducing the oxygen content is carried out in the exhaust gases from the first heat exchanger (2).

2. Process according to Claim 1, **characterized in that** water is mixed into the exhaust gas from the first heat exchanger (2) in order to cool the exhaust gas to the necessary carbonization temperature.

3. Process according to either Claim 1 or 2, **characterized by** introduction of the exhaust air from the carbonization reactor (17) into a clinker cooler (11) present in the plant.

4. Process according to any of Claims 1 to 3, **characterized in that** the carbonization in the reactor (17) occurs in countercurrent.

5. Process according to any of Claims 1 to 4, where a rotary tube drier (40) is used as drying reactor and clinker cooler exhaust air is taken off from the rear part (11b) of a clinker cooler (11) present in the plant (1), in which the clinker has already substantially cooled and only has residual heat having the temperature customary for the process for producing cement clinker, to effect drying.

6. Process according to any of Claims 1 to 5, **characterized in that** the biomass is milled after carbonization.

7. Process according to Claim 6, **characterized in that** the carbonized biomass is fed to a burner in the rotary tube furnace (4) and/or to a burner in the calciner (5).

8. Plant (1) for producing cement from raw meal according to Claim 1, which comprises an apparatus for the treatment of biomass, **characterized in that** a drying reactor (40) for predrying the biomass is present, where the biomass is predried by means of the exhaust gases from a second heat exchanger (11) of the plant (1), and **in that** a carbonization reactor (17) through which circulated exhaust gases from the first heat exchanger (2) present in the plant (1) for producing cement, which originate from the rotary tube furnace (4) and the calciner (5), flow and in which the predried biomass is carbonized is present, where a burner (16a) for reducing the oxygen content in the exhaust gases from the first heat exchanger (2) is provided.

9. Plant according to Claim 8, **characterized in that** the drying reactor is a rotary tube drier (40) for predrying the biomass in the plant (1).

## Revendications

1. Procédé de traitement d'une biomasse en tant que combustible dans une unité (1) pour la fabrication de clinker de ciment à partir de farine crue, comprenant dans la direction d'écoulement du matériau farine crue un premier échangeur de chaleur (2), un dispositif de calcination (5) et un four tubulaire rotatif (4),
**caractérisé par**
un pré-séchage de la biomasse dans un réacteur de séchage (40), la biomasse étant pré-séchée par les gaz d'échappement d'un deuxième échangeur de chaleur (11) de l'unité (1), et par
une carbonisation ultérieure de la biomasse dans un réacteur de carbonisation (17), des gaz d'échappement mis en circulation, s'écoulant depuis le four tubulaire rotatif (4) dans le dispositif de calcination (5) puis dans le premier échangeur de chaleur (2), étant utilisés pour la carbonisation, une postcombustion (16a) pour la réduction de la teneur en oxygène étant tout d'abord réalisée dans les gaz d'échappement du premier échangeur de chaleur (2).

2. Procédé selon la revendication 1, **caractérisé en ce que** de l'eau est mélangée avec le gaz d'échappement du premier échangeur de chaleur (2) pour le refroidissement à la température de carbonisation nécessaire.

3. Procédé selon l'une quelconque des revendications 1 ou 2, **caractérisé par** l'introduction de l'air d'échappement du réacteur de carbonisation (17) dans un refroidisseur de clinker (11) se trouvant dans l'unité.

4. Procédé selon l'une quelconque des revendications 1 à 3, **caractérisé en ce que** la carbonisation dans le réacteur de carbonisation (17) a lieu par un procédé à contre-courant.

5. Procédé selon l'une quelconque des revendications 1 à 4, dans lequel un séchoir tubulaire rotatif (40) est utilisé en tant que réacteur de séchage et dans lequel l'air d'échappement du refroidisseur de clinker issu de la partie arrière (11b) d'un refroidisseur de clinker (11) se trouvant dans l'unité (1) est soutiré pour le séchage, dans lequel le clinker est déjà essentiellement refroidi et ne présente plus qu'une chaleur résiduelle à une température usuelle pour le procédé de fabrication de clinker de ciment.

6. Procédé selon l'une quelconque des revendications 1 à 5, **caractérisé en ce que** la biomasse est broyée après la carbonisation.

7. Procédé selon la revendication 6, **caractérisé en ce que** la biomasse carbonisée est introduite dans un brûleur dans le four tubulaire rotatif (4) et/ou dans un brûleur dans le dispositif de calcination (5).

8. Unité (1) pour la fabrication de ciment à partir de farine crue selon la revendication 1, qui comprend un dispositif pour le traitement d'une biomasse,
**caractérisée en ce que**
un réacteur de séchage (40) pour le pré-séchage de la biomasse est présent, la biomasse étant pré-séchée par les gaz d'échappement d'un deuxième échangeur de chaleur (11) de l'unité (1), et **en ce que**
un réacteur de carbonisation (17) est présent, qui est traversé par des gaz d'échappement mis en circulation du premier échangeur de chaleur (2) présent dans l'unité (1) pour la fabrication de ciment, qui proviennent du four tubulaire rotatif (4) et du dispositif de calcination (5), dans lequel la biomasse pré-séchée est carbonisée, un brûleur (16a) pour la réduction de la teneur en oxygène dans les gaz d'échappement du premier échangeur de chaleur (2) étant prévu.

9. Unité selon la revendication 8, **caractérisée en ce que** le réacteur de séchage est un séchoir tubulaire rotatif (40) pour le pré-séchage de la biomasse dans l'unité (1).
